# EUROPÄISCHE PATENTSCHRIFT

(11) **EP 2 441 183 B1**
(45) Veröffentlichungstag und Bekanntmachung des Hinweises auf die Patenterteilung: **05.06.2013**
(21) Anmeldenummer: 10739840.6
(22) Anmeldetag: 14.06.2010
(51) Int. Cl.: H04B 10/2581

(54) **VERFAHREN UND VORRICHTUNG ZUR ÜBERTRAGUNG OPTISCHER INFORMATIONEN ZWISCHEN SENDERSTATION UND EMPFÄNGERSTATION ÜBER EINEN MEHRMODEN-LICHTWELLENLEITER**
METHOD AND DEVICE FOR TRANSMITTING OPTICAL INFORMATION BETWEEN AN EMITTER STATION AND RECEIVING STATION VIA A MULTI-MODE OPTICAL WAVE GUIDE
PROCÉDÉ ET DISPOSITIF DE TRANSMISSION D'INFORMATIONS OPTIQUES ENTRE UNE STATION D'ÉMISSION ET UNE STATION DE RÉCEPTION PAR L'INTERMÉDIAIRE D'UN GUIDE D'ONDE OPTIQUE MULTIMODAL

(30) Priorität: 13.06.2009 DE 102009025232
(43) Veröffentlichungstag der Anmeldung: 18.04.2012
(73) Patentinhaber: Technische Universität Dortmund, 44227 Dortmund (DE)
(72) Erfinder: KRUMMRICH, Peter, 44149 Dortmund (DE)
(74) Vertreter: Schneider, Uwe
(86) Internationale Anmeldenummer: PCT/DE2010/000677
(87) Internationale Veröffentlichungsnummer: WO 2010/142285

(56) Entgegenhaltungen:
- EP-A2- 0 265 918
- EP-A2- 0 390 002
- US-A1- 2007 280 695
- SAEED BAGHERI ET AL: "Silicon-on-insulator mode-selective add-drop unit for on-chip mode-division multiplexing", GROUP IV PHOTONICS, 2009. GFP '09. 6TH IEEE INTERNATIONAL CONFERENCE ON, IEEE, PISCATAWAY, NJ, USA, 9. September 2009 (2009-09-09), Seiten 166-168, XP031569958, ISBN: 978-1-4244-4402-1
- KOONEN A M J ET AL: "Advanced Technologies for Service-Integrated Optical In-Building Networks", TRANSPARENT OPTICAL NETWORKS, 2007. ICTON '07. 9TH INTERNATIONAL CONFERENCE ON, IEEE, PI, 1. Juli 2007 (2007-07-01), Seiten 122-125, XP031130464, ISBN: 978-1-4244-1248-8
- RONALD FREUND: "High-speed transmission in multimode fibers", OPTICAL FIBER COMMUNICATION - INCUDES POST DEADLINE PAPERS, 2009. OFC 2009. CONFERENCE ON, IEEE, PISCATAWAY, NJ, USA, 22. März 2009 (2009-03-22), Seiten 1-63, XP031467719, ISBN: 978-1-4244-2606-5

## Beschreibung

Die Erfindung betrifft ein Verfahren und Vorrichtung zur Übertragung optischer Informationen zwischen Senderstation und Empfängerstation über einen Mehrmoden-Lichtwellenleiter gemäß Oberbegriff des Anspruches 1 und eine zur Durchführung des Verfahrens geeignete Vorrichtung gemäß Oberbegriff des Anspruches 12.

Die Infrastruktur für die unterschiedlichsten Zwecke der Datenübertragung ist in den letzten Jahren ständig weiter entwickelt worden. Hierbei haben die Anforderungen an die Erhöhung der Bandbreite bei der Datenübertragung die technische Weiterentwicklung der Übertragungstechniken wesentlich geprägt. Sowohl die Übertragung mittels elektrischer Signale in Kupferkabelnetzen als auch die Übertragung mittels optischer Signale in Lichtwellenleiternetzen haben hierbei große Fortschritte gemacht. Allerdings werden die erreichten Erhöhungen der dadurch zusätzlich zur Verfügung gestellten Bandbreite durch die größeren damit zu übertragenden Datenmenge immer wieder kompensiert.

Optische Übertragungssysteme mit dem Wellenlängenmultiplexbetrieb bieten derzeit den einzigen Ansatz für eine Übertragung von Datenströmen mit einer Gesamtdatenrate von mehreren Terabit pro Sekunde über Entfernungen von mehreren hundert Kilometern in einem einzigen Übertragungsmedium. Heute kommerziell verfügbare Systeme arbeiten mit einer Kapazität von bis zu 3,2 Tbit/s pro Glasfaser. Die Kapazitätsnachfrage steigt mit ca. 50 % bis 100 % pro Jahr.

Durch die Verwendung zusätzlicher Wellenlängenbänder und die Steigerung der Bandbreiteeffizienz lässt sich die maximal erreichbare Kapazität bei diesem Ansatz mit vertretbarem Aufwand noch ungefähr um einen Faktor 20 steigern. Wenn die Kapazitätsnachfrage konservativ geschätzt auch in Zukunft mit 50 % pro Jahr wächst, werden in acht Jahren neue Lösungen zur Befriedigung des Bedarfs benötigt, bei einem Wachstum von 100 % pro Jahr bereits in 5 Jahren.

Gesucht wird daher eine Möglichkeit, der eine Steigerung der Übertragungskapazität weit über einen Faktor 20 hinaus erlaubt.

Die ersten faseroptischen Übertragungssysteme arbeiteten mit einer einzelnen Wellenlänge bzw. einem optischen Träger und erzielten eine Kapazität von 34 Mbit/s. Das Datensignal wurde dem Träger mit Hilfe einer zweistufigen Intensitätsmodulation aufgeprägt - Einschalten des Senders für ein "1"-Bit und Ausschalten für ein "0"-Bit. Eine Steigerung der Übertragungskapazität von Generation zu Generation erfolgte durch die Verkürzung der Symboldauer, was die Übertragung von mehr Bits pro Zeiteinheit erlaubt. Dieser Zeitmultiplexbetrieb bietet einen möglichen Ansatz zur Anhebung der Bitrate. Heute kommerziell erhältliche Übertragungssysteme erzielen durch elektrischen Zeitmultiplexbetrieb Kanaldatenraten von bis zu 40 Gbit/s. Im Labor wurden mit Hilfe des optischen Zeitmultiplexbefiriebs Kanaldatenraten von etwas über 1 Tbit/s demonstriert.

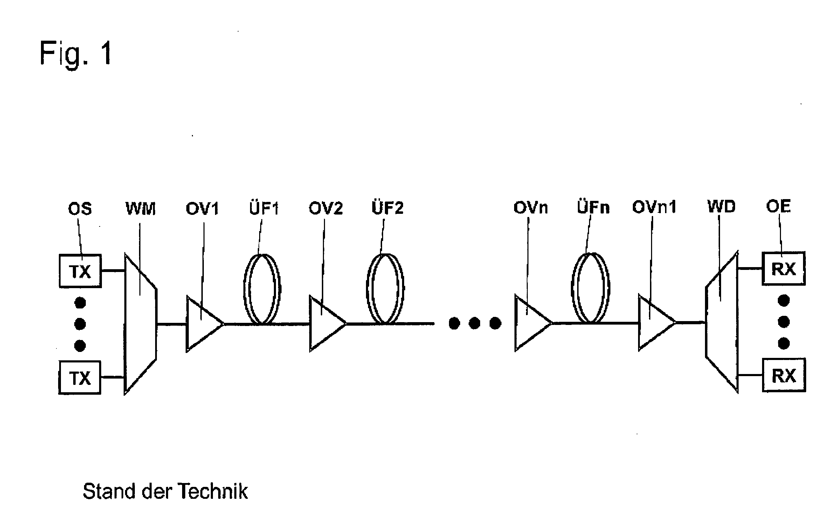

Eine weitere Steigerung der Übertragungskapazität pro Faser lässt sich durch den sogenannten Wellenlängenmultiplexbetrieb (WDM) bewerkstelligen, d. h. die Übertragung mehrerer Kanäle in einer Faser bei unterschiedlichen Wellenlängen (siehe Fig. 1). Mehrere optische Sender OS erzeugen Signale TX bei unterschiedlichen Wellenlängen. Diese werden mit Hilfe eines Wellenlängenmultiplexers WM zusammengeführt und können anschließend in optischen Verstärkern OV₁ ... OVₙ₁ gemeinsam verstärkt und in Übertragungsfaserabschnitten ÜF₁ ... ÜFₙ gemeinsam übertragen werden. Am Ende der Übertragungsstrecke trennt ein Wellenlängendemultiplexer WD die übertragenen Signale TX wieder und führt sie als Empfangssignale RX einzelnen Empfängern OE zu. Heute kommerziell verfügbare Systeme übertragen mit Hilfe der WDM-Technik bis zu 80 Kanäle, was bei einer Kanaldatenrate von 40 Gbit/s eine Gesamtkapazität von 3,2 Tbit/s ergibt. Die 80-Kanalsysteme arbeiten mit einem Kanalabstand von 50 Ghz. Dies entspricht bei einer Kanaldatenrate von 40 Gbit/s einer Bandbreiteeffizienz von 0,8 Bit/s/Hz.

Der Polarisationsmultiplexbetrieb, d. h. die Übertragung zweier unabhängiger Signale in den beiden orthogonalen Polarisationen der in der Weitverkehrstechnik verwendeten Einmodenfasern, bietet einen weiteren Ansatz zur Steigerung der Bandbreiteeffizienz. Mit Hilfe dieses Verfahrens lässt sich die Übertragungskapazität bei gleicher Kanaldatenrate und Anzahl der Wellenlängen verdoppeln.
Ein Übertragungsverfahren nach dem Stand der Technik ist aus der EP-A 0390002 bekannt.

Mehrstufen-Modulationsverfahren erlauben eine weitere Steigerung der Bandbreiteeffizienz. Diese übertragen nicht nur ein Bit pro Zeiteinheit bzw. Symbol wie die zweistufige bzw. binäre Intensitätsmodulation, sondern mehrere. Die differentielle quaternäre Phasenmodulation (DQPSK) ermöglicht als Vierstufenverfahren durch die Übertragung von zwei Bit pro Symbol bei gleicher Symbolrate im Vergleich zu binären Verfahren eine Verdopplung der Bitrate. Eine weitere Steigerung der pro Symbol übertragenen Bits ergibt bei gleichem Kanalabstand und gleicher Symbolrate eine noch höhere Bandbreiteeffizienz. Beispielsweise ermöglicht das achtstufige differentielle Phasenmodulationsverfahren D8PSK eine Übertragung von 3 Bits pro Symbol. Der immer geringere Symbolabstand der höherstufigen Verfahren führt jedoch zu Anforderungen an den optischen Signal-zu-Rauschabstand, die sich für die gewünschten Reichweiten kaum noch erfüllen lassen. Weiterhin leiden die höherstufigen Verfahren überproportional stark unter dem Einfluss nichtlinearer Effekte in der Übertragungsfaser, was die Reichweite zusätzlich einschränkt. Halbwegs machbar erscheint in der Weitverkehrstechnik der Einsatz von vierstufigen Modulationsverfahren in Kombination mit Polarisations-Multiplexbetrieb. Bei gleicher Symbolrate und Kanalabstand ließe sich damit im Vergleich zu den heute eingesetzten zweistufigen Modulationsverfahren ohne Polarisationsmultiplexbetrieb die Bandbreiteeffizienz um einen Faktor 4 auf 3,2 Bit/s/Hz steigern.

Die Übertragung zusätzlicher Kanäle erlaubt ebenfalls eine Steigerung der Übertragungskapazität. Dafür müssen neue Wellenlängenbänder in Betrieb genommen werden bzw. das derzeit genutzte C-Band muss erweitert werden. Aufgrund des Anstiegs der spektralen Dämpfung an den Rändern des heute im Einsatz befindlichen Bandes sinkt bei sonst gleichen Übertragungsverfahren die Reichweite. Bis zu ungefähr einer Verfünffachung der heute eingesetzten Kanalzahl ließe sich dieser Dämpfungsanstieg durch bekannte Verfahren ausgleichen bzw. tolerieren. In Kombination mit der Vergrößerung der Bandbreiteeffizienz erlaubt die Anhebung der Kanalzahl eine Steigerung der Übertragungskapazität pro Faser ungefähr um einen Faktor 20. Erreichen lässt sich dieser Faktor jedoch nur mit erheblichem technischen Aufwand. Auch die Installation eines zweiten Übertragungssystems mit einer eigenen Faser erlaubt eine Verdopplung der Übertragungskapazität pro Kabel. Aus Kostengründen scheidet dieser Raummultiplex-Ansatz jedoch aus.

Damit sind aus heutiger Sicht keine Ansätze bekannt, die in der Weitverkehrstechnik eine kosteneffiziente Steigerung der Übertragungskapazität deutlich über einen Faktor 20 hinaus ermöglichen.

Aufgabe der vorliegenden Erfindung ist es daher, ein Verfahren und eine Vorrichtung anzugeben, mit denen sich die Übertragungskapazität von optischen Wellenlängenmultiplex-Übertragungssystemen pro Lichtwellenleiter steigern lässt.

Die Lösung der erfindungsgemäßen Aufgabe ergibt sich hinsichtlich des Verfahrens aus den kennzeichnenden Merkmalen des Anspruches 1 und hinsichtlich der Vorrichtung aus den kennzeichnenden Merkmalen des Anspruches 12 in Zusammenwirken mit den Merkmalen des zugehörigen Oberbegriffes. Weitere vorteilhafte Ausgestaltungen der Erfindung ergeben sich aus den Unteransprüchen.

Die Erfindung geht aus von einem Verfahren zur Übertragung optischer Informationen zwischen einer Senderstation und einer Empfängerstation über einen Mehrmoden-Lichtwellenleiter unter Verwendung eines Wellenlängenmultiplex-Verfahrens. Unter Lichtwellenleiter soll jede Art Lichtwellen leidender Fasern oder Bahnen verstanden werden, die in der optischen Übertragungstechnik verwendet werden kann. Ein derartiges gattungsgemäßes Verfahren wird dadurch weiter entwickelt, dass mehrere optische Sender für jede der zu übertragenden Wellenlängen jeweils ein Signal erzeugen und diese Signale in Form einer Anzahl von Moden über Modenmultiplexer und Wellenlängenmultiplexer auf den Mehrmoden-Lichtwellenleiter aufgeschaltet werden, wobei der Mehrmoden-Lichtwellenleiter für jede der zu übertragenden Moden einen eigenen ausbreitungsfähigen Modus innerhalb des Lichtwellenleiters aufweist, nach Übertragung und ggf. Regeneration und/oder Verstärkung des Signals über den Mehrmoden-Lichtwellenleiter die übertragenen Signale über Wellenlängendemultiplexer in Gruppen von Signalen gleicher Wellenlänge und über Modendemultiplexer in Signale gleichen Modus aufgespalten werden, und anschließend aus den übertragenen gedemultiplexten Signalen die Interferenzsignale entfernt werden, die durch das Überkoppeln zwischen den einzelnen Moden bei der Übertragung über den Mehrmoden-Lichtwellenleiter entstanden sind. Das erfindungsgemäße Verfahren verwendet einen Modenmultiplexbetrieb zur Übertragung zusätzlicher Kanäle in einem Wellenleiter. Bisherige Wellenlängenmultiplex-Systeme arbeiten mit Einmoden-Wellenleitern. Diese führen nur einen einzigen Modus, diesen jedoch in zwei zueinander orthogonalen Polarisationen, was der Polarisationsmultiplexbetrieb ausnutzt. Durch eine Vergrößerung des Kerndurchmessers und/oder eine Anhebung des Indexsprungs an der Kern-Mantel-Grenze des Wellenleiters lässt sich die Anzahl geführter Moden in einem Stufen-Wellenleiter steigern. Auch bei anders geformten Brechzahlprofilen steigt die Anzahl geführter Moden mit zunehmendem Faserparameter V. Mehrmoden-Wellenleiter kommen für Kurzstreckenverbindungen bereits zum Einsatz. In diesem Anwendungsfall wird ein einzelnes Signal in allen ausbreitungsfähigen Moden gemeinsam übertragen. Das erfindungsgemäße Verfahren unter Einbeziehung eines Modenmultiplexbetriebes nutzt hingegen jeden ausbreitungsfähigen Modus zur Übertragung eines eigenen Signals bzw. Kanals. Hierbei erfolgt eine gezielte Anregung jedes einzelnen Modus eines Mehrmoden-Lichtwellenleiters durch jeweils ein eigenes Signal, die gemeinsame Übertragung der Signale in Modenmultiplextechnik und die anschließende Trennung der Signale samt einer Auslöschung von Interferenzsignalen, die von der Modenkopplung herrühren. Der Vorteil der Erfindung besteht darin, dass sich mit Hilfe des Modenmultiplexbetriebs, bei Bedarf zusammen mit den anderen bekannten Verfahren, die Übertragungskapazität deutlich über die Kapazität hinaus steigern lässt, die alleine durch eine Kombination von Zeitmultiplexbetrieb, Wellenlängenmultiplexbetrieb, Polarisationsmultiplexbetrieb oder Mehrstufenmodulationsverfahren für eine gewünschte Reichweite kosteneffizient erreicht werden kann.

Hinsichtlich der Abfolge des Multiplexens der Signale auf der Senderseite und des Demultiplexens der empfangenen Signale auf der Empfängerseite können unterschiedliche Konfigurationen zum Einsatz kommen:

In einer ersten Ausgestaltung können beim Multiplexen die Signale für jede der zu übertragenden Wellenlängen zuerst auf eine Anzahl von Modenmultiplexern und anschließend auf einen gemeinsamen Wellenlängenmultiplexer aufgeschaltet werden. Hierbei werden typischerweise die Signale zum Multiplexen in den Modenmultiplexem den Modenmultiplexern jeweils im Grundmodus einer Einmodenfaser zugeführt, wobei in den Modenmultiplexern etwa eine Transformation der Feldverteilungen stattfindet, bei der jedes ankommende Signal jeweils einen Modus der ausgangsseitig der Modenmultiplexer angeordneten Mehrmoden-Lichtwellenleiters anregt. Voraussetzung hierfür ist, dass in den Mehrmoden-Lichtwellenleitern zwischen Modenmultiplexern und Wellenlängenmultiplexer mindestens so viele Moden ausbreitungsfähig sind, wie Signale zwischen Modenmultiplexern und Wellenlängenmultiplexer übertragen werden sollen. Anschließend werden im Wellenlängenmultiplexer alle Signalgruppen bei den verschiedenen Wellenlängen in einem einzigen Mehrmoden-Lichtwellenleiter für die Übertragung an die Empfängerstation zusammengeführt und in den für die Langstrecken-Übertragung gedachten Mehrmoden-Lichtwellenleiter eingespeist und typischerweise unter wiederholter Verstärkung und Regeneration der Signale über eine größere Distanz übertragen.

In einer anderen Ausgestaltung ist es aber auch denkbar, dass beim Multiplexen die Signale für jede der zu übertragenden Wellenlängen zuerst auf eine Anzahl von Wellenlängenmultiplexern und anschließend auf einen gemeinsamen Modenmultiplexer aufgeschaltet werden. Hierbei werden die Signale zum Multiplexen in den Wellenlängenmultiplexern jeweils im Grundmodus eines Einmoden-Lichtwellenleiters den Wellenlängenmultiplexern zugeführt und in dem den Wellenlängenmultiplexern nachgeschalteten Modenmultiplexer findet eine Anregung der Moden eines Mehrmoden-Lichtwellenleiters durch die jeweiligen von den Wellenlängenmultiplexern erzeugten Wellenlängengruppen statt.

Entsprechend können auch auf der Empfängerseite beim Demultiplexen die übertragenen Signale zuerst auf einen Wellenlängendemultiplexer und anschließend auf eine Anzahl von Modendemultiplexern aufgeschaltet werden. Hierbei trennt der Wellenlängendemultiplexer die Kanalgruppen bei den einzelnen Wellenlängen und führt jeweils eine Gruppe von Kanälen mit gleicher Wellenlänge über Mehrmoden-Lichtwellenleiter den Modendemultiplexern zu, in denen dann eine Trennung der Signale in den einzelnen Moden stattfindet. Alternativ kann auch hier wieder die Abfolge des Demultiplexens von Mode und Wellenlänge dadurch geändert werden, dass beim Demultiplexen die übertragenen Signale zuerst auf einen Modendemultiplexer und anschließend auf eine Anzahl von Wellenlängendemultiplexern aufgeschaltet werden, wobei in dem Modendemultiplexer eine Trennung der Signalgruppen in den einzelnen Moden stattfindet und die Wellenlängendemultiplexer die Signale bei den einzelnen Wellenlängen trennen.

Von Wichtigkeit ist weiterhin, dass bei der Übertragung der Signale zwischen Senderstation und Empfängerstation über den Mehrmoden-Lichtwellenleiter die optische Verstärkung und Übertragung der Signale über den Mehrmoden-Lichtwellenleiters zwischen Sender und Empfänger in Mehrmodentechnik erfolgt, so dass alle in den eingespeisten Signalen enthaltenen Informationen über Wellenlänge und Mode vollständig erhalten und zur Empfängerstation übertragen werden.

Von Vorteil ist es weiterhin, wenn bei dem Verfahren ein Stufen-Lichtwellenleiter zum Einsatz kommt, bei dem der Mehrmoden-Lichtwellenleiter durch Vergrößerung des Kerndurchmessers und/oder eine Anhebung des Indexsprungs an der Kern-Mantel-Grenze eine erhöhte Anzahl geführter Moden aufweist. Alternativ ist es auch denkbar, dass der Mehrmoden-Lichtwellenleiter durch Vergrößerung des Faserparameters V bei ungleich geformten Brechzahlprofilen eine erhöhte Anzahl geführter Moden aufweist. Hierdurch kann die Anzahl der zur Übertragung von Informationen zur Verfügung stehenden Moden entsprechend dem Übertragungsbedarf bzw. der benötigten Bandbreite angepasst werden.

Die Erfindung betrifft weiterhin eine Vorrichtung zur Übertragung optischer Informationen zwischen einer Senderstation und einer Empfängerstation über einen Mehrmoden-Lichtwellenleiter unter Verwendung eines Wellenlängenmultiplex-Verfahrens, insbesondere zur Durchführung des Verfahrens nach Anspruch 1. Eine derartige Vorrichtung weist eine Senderstation mit mehreren optischen Sendern für jede der zu übertragenden Wellenlängen auf, die jeweils ein Signal erzeugen und diese Signale über Modenmultiplexer und Wellenlängenmultiplexer auf den Mehrmoden-Lichtwellenleiter aufschalten, wobei der Mehrmoden-Lichtwellenleiter für jede der zu übertragenden Moden einen eigenen ausbreitungsfähigen Modus innerhalb des Mehrmoden-Lichtwellenleiters aufweist. Weiterhin weist die Vorrichtung eine Empfängerstation mit mehreren optischen Empfängern auf, die die übertragenen Signale über Wellenlängendemultiplexer in Gruppen von Signalen gleicher Wellenlänge und über Modendemultiplexer in Signale gleichen Modus aufspalten.

Auch bei der Vorrichtung ist es wie schon für das Verfahren vorstehend beschrieben denkbar, dass zum Multiplexen und Demultiplexen der Informationen unterschiedliche Anordnungen von Modenmultiplexer und Wellenlängenmultiplexer bzw. von Modendemultiplexer und Wellenlängendemultiplexer zum Einsatz kommen.

Dabei kann in einer ersten Ausgestaltung die Senderstation zum Multiplexen der Signale für jede der zu übertragenden Wellenlängen oder Wellenlängenkanäle je einen Modenmultiplexer und einen gemeinsamen Wellenlängenmultiplexer aufweisen, der die Ausgangssignale der Modenmultiplexer verarbeitet. Alternativ kann auch die Reihenfolge von Modenmultiplexer und Wellenlängenmultiplexer vertauscht werden, so dass die Senderstation zum Multiplexen der Signale für jede der zu übertragenden Wellenlängen oder Wellenlängenkanäle je einen Wellenlängenmultiplexer und einen gemeinsamen Modenmultiplexer aufweist, der die Ausgangssignale der Wellenlängenmultiplexer verarbeitet.

Entsprechendes gilt auch für die die Empfängerstation, bei der zum Demultiplexen der Signale für alle übertragenen Wellenlängen oder Wellenlängenkanäle ein gemeinsamer Wellenlängendemultiplexer und eine Anzahl von Modendemultiplexern zum Einsatz kommen kann, die die Ausgangssignale des Wellenlängenmultiplexers verarbeitet. Alternativ kann auch hier die Reihenfolge von Modendemultiplexer und Wellenlängendemultiplexer vertauscht werden, indem die Empfängerstation zum Demultiplexen der Signale für alle übertragenen Wellenlängen oder Wellenlängenkanäle einen gemeinsamen Modendemultiplexer und eine Anzahl von Wellenlängendemultiplexern aufweist, die die Ausgangssignale des Modendemultiplexers verarbeiten.

Hinsichtlich der Gestaltung eines Modemultiplexers ist es denkbar, dass der Modemultiplexer eingangsseitig eine der Anzahl der zu übertragenden Signalkanäle entsprechende Anzahl von Gradientenlinsen GLₑᵢₙ aufweist, die die Feldverteilung der Signale im Grundmodus von Einmoden-Lichtwellenleitern in parallele Strahlen umwandeln, und den Gradientenlinsen Glₑᵢₙ Modenkonverter MK nachgeschaltet sind, die die Feldverteilungen der Signale derart konvertieren, dass jedes Signal nach der Zusammenführung in teildurchlässigen Spiegeln TS und der Fokussierung mit Hilfe einer nachgeschalteten Gradientenlinse (GLₐᵤₛ) jeweils genau einen Modus des ausgangsseitig des Modenmultiplexers angeordneten Mehrmoden-Lichtwellenleiters anregt. Hierbei können in den Modenkonvertern MK Hologramme oder geeignete räumliche Filter vorhanden sein, mit denen die Transformation der Feldverteilung erfolgt.

Hinsichtlich der Gestaltung eines Modendemultiplexers ist es denkbar, dass der Modendemultiplexer eine eingangsseitige Gradientenlinse Glₑᵢₙ aufweist, die das Ausgangssignal des Mehrmoden-Lichtwellenleiters in einen parallelen Strahl transformiert, der Gradientenlinse Glₑᵢₙ teildurchlässige Spiegel TS nachgeschaltet sind, die den parallelen Strahl vervielfachen und Modenkonvertern MK zuführen, die jeweils die Transformation der Feldverteilung des gewünschten Modus in eine Feldverteilung vornehmen, die nach der Fokussierung in einer nachgeschalteten Gradientenlinse Glₐᵤₛ den Grundmodus des ausgangsseitigen Einmoden-Lichtwellenleiters anregen. Hierbei sind vorteilhaft die Modenkonverter MK derart ausgebildet, dass sie die Orthogonalität der Feldverteilungen erhalten. Dadurch ist erreichbar, dass der Modendemultiplexer jeden Modus des eingangsseitigen Mehrmoden-Lichtwellenleiters jeweils in genau einen ausgangsseitigen Einmoden-Lichtwellenleiter einkoppelt. Weiterhin kann dem Modendemultiplexer ein Kreuzmodeninterferenzauslöscher XMIC nachgeschaltet sein, der eine Trennung der entlang der Übertragungsstrecke durch Modenkopplung entstandenen Interferenzanteile vornimmt. Dieser Kreuzmodeninterferenzauslöscher XMIC kann pro Eingang einen Teil des Signals auskoppeln, es mit einem Betrag und Phase des Signals beeinflussenden Koeffizienten multiplizieren und es einem anderen Ausgang zuführen.

Alternativ ist es auch denkbar, dass dem Modendemultiplexer eine elektrische Baugruppe nachgeschaltet ist, die aus den gedemultiplexten Signalen nach der Wandlung in die elektrische Ebene die Interferenzanteile dadurch entfernt, dass die Ausgangssignale des Modendemultiplexers mit Hilfe von Überlagerungsempfängern kohärent detektiert und anschließend in digitale Signale gewandelt werden. Hierbei können in der elektrischen Baugruppe Mittel zur digitalen Signalverarbeitung vorgesehen sein, die das Auslöschen der Interferenzanteile nach dem Prinzip des Kreuzmodeninterferenzauslöschers durchführen.

Als Alternative zur vorstehend beschriebenen Vorgehensweise zum Demultiplexen kann in der Empfängerstation auch eine Wellenleiteranordnung zur kohärenten Detektion hinter dem Ausgang des Mehrmoden-Lichtwellenleiters MM-LWL mit einer Koppelzone KZ angeordnet sein, die in eine Anzahl von Einmoden-Lichtwellenleiter SM-LWL übergeht. Hierbei wird die Anzahl der abgehenden Einmoden-Lichtwellenleiter SM-LWL so gewählt, dass pro in dem Mehrmoden-Lichtwellenleiter MM-LWL geführtem Modus mindestens ein Einmoden-Lichtwellenleiter SM-LWL vorgesehen ist. Hierbei ist es weiterhin denkbar, dass bei dieser Ausgestaltung eine elektrische Schaltung vorgesehen ist, die eine Trennung der Signale nach der kohärenten Detektion durchführt, vorzugsweise mit Hilfe eines Kreuzmodeninterferenzauslöschers.

Denkbar ist es weiterhin, dass in der Koppelzone KZ eine Freistrahlanordnung mit Linsen oder anderen abbildenden Elementen wie gekrümmten Spiegeln oder Hologrammen vorgesehen ist.

Hinsichtlich der Ausgestaltung des Modendemultiplexers kann weiterhin der Modendemultiplexer die Überlagerung des Signals des Lokaloszillators LO mit dem zu detektierenden Signal durchführen, wozu beispielsweise eine Gradientenlinse GL_{LO} vorgesehen ist, die das Ausgangssignal des Lokaloszillators LO in einen parallelen Strahl wandelt und in einem teildurchlässigen Spiegel TS mit dem zu detektierenden Signal zusammenführt, wobei anschließend die Einkopplung beider Signale mit Hilfe einer Gradientenlinse GLₐᵤₛ in einen Einmoden-Lichtwellenleiter erfolgt. Z.B. kann die Gradientenlinse GL_{LO} dabei zur Erzeugung von Phasendiversität und/oder Polarisationsdiversität ausgebildet sein. Hierbei kann das Signal des Lokaloszillators LO auch senkrecht zu der Ebene der Strahlführung der anderen Signale in dem Modendemultiplexer zugeführt werden. Auch ist es denkbar, dass das Signal des Lokaloszillators LO mit Hilfe von teildurchlässigen Spiegeln TS aufgeteilt und mehreren Gradientenlinsen GL zugeführt wird.

Eine besonders bevorzugte Ausführungsform der erfindungsgemäßen Vorrichtung zeigt die Zeichnung.

Es zeigen:
- Figur 1: - grundsätzlicher Aufbau eines Wellenlängenmultiplex-Übertragungssystem gemäß dem Stand der Technik,
- Figur 2: - grundsätzlicher Aufbau einer erfindungsgemäßen Vorrichtung mit einem Wellenlängenmultiplex-Übertragungssystem, das zusätzlich Modenmultiplexbetrieb verwendet,
- Figur 3: - denkbare Ausführungsform eines Modenmultiplexers,
- Figur 4: - denkbare Ausführungsform eines Modendemultiplexers,
- Figur 5: - denkbare Ausführungsform eines Modendemultiplexers mit Lokaloszillator,
- Figur 6: - denkbare Ausführungsform eines Modendemultiplexers in Wellenleiterausführung.

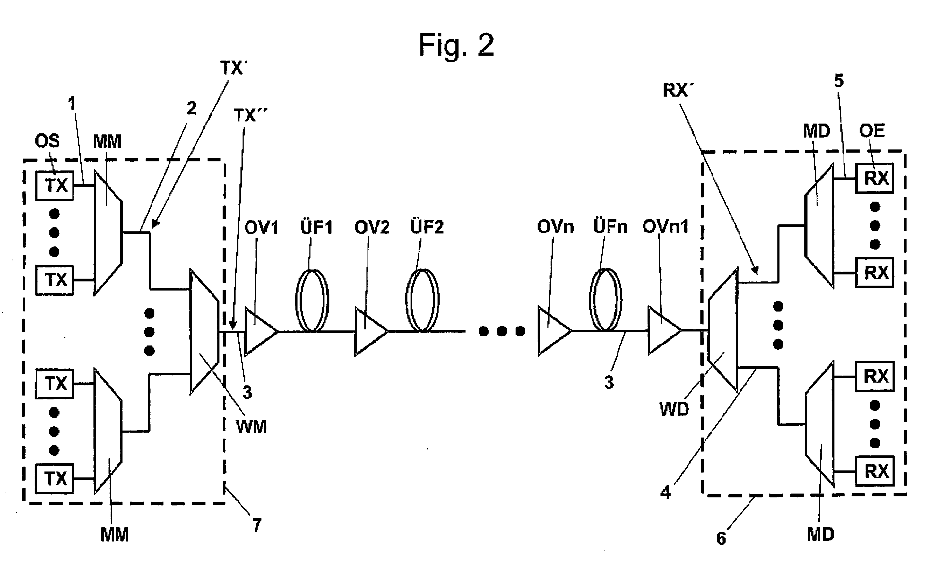

In der Figur 2 ist ein grundsätzlicher Aufbau einer erfindungsgemäßen Vorrichtung mit einem Wellenlängenmultiplex-Übertragungssystem dargestellt, das zusätzlich Modenmultiplexbetrieb verwendet.

Hierbei erzeugen pro Wellenlänge mehrere optische Sender OS je ein Signal TX. Diese Signale TX werden jeweils im Grundmodus eines Einmoden-Lichtwellenleiters 1 zu einem zugehörigen Modenmultiplexer MM aus einer Anzahl gleicher Modenmultiplexer MM geführt, die für unterschiedliche Wellenlängenbereiche der Signale TX zuständig sind. Dort findet eine Transformation der Feldverteilungen in der Form statt, dass jedes ankommende Signal TX jeweils einen Modus des ausgangsseitigen Mehrmoden-Lichtwellenleiters 2 zu einem nachgeschalteten Wellenlängenmultiplexer WM anregt. In dem Mehrmoden-Lichtwellenleiter 2 sind mindestens so viele Moden ausbreitungsfähig, wie Signale TX übertragen werden sollen. Der Mehrmoden-Lichtwellenleiter 2 führt die zusammengemultiplexten Signale TX', deren Träger alle die selbe Wellenlänge aufweisen, einem Wellenlängenmultiplexer WM zu. Dort werden die zusammengemultiplexten Signale TX' mit den Signalgruppen bei den anderen Wellenlängen aus den anderen Modenmultiplexern MM zu einem Signal TX" in einem einzigen Mehrmoden-Lichtwellenleiter 3 zusammengeführt, der eine Übertragung über eine weitere Übertragungsstrecke vornimmt.

Die anschließende optische Verstärkung OV₁, OV₂, ... OVₙ, OVₙ₁ über die Übertragungsstrecken ÜF₁, ÜF₂ ... ÜFₙ findet während der Übertragung der Signale TX" ebenfalls in Mehrmodentechnik statt. Am Ende der Übertragungsstrecke des Mehrmoden-Lichtwellenleiters 3 trennt zunächst ein Wellenlängendemultiplexer WD die Kanalgruppen bei den einzelnen Wellenlängen und führt jeweils eine Gruppe von Kanälen mit gleicher Wellenlänge in Mehrmoden-Lichtwellenleiter 4 einem Modendemultiplexer MD zu. Dort findet eine Trennung der Signale RX' in die einzelnen Moden statt. Da während der Übertragung ein Überkoppeln zwischen Moden auftreten kann, müssen die Interferenzanteile entfernt werden. Danach stehen die einzelnen Signale RX für eine nicht weiter dargestellte Weiterverarbeitung zur Verfügung.

Die Reihenfolge des Modenmultiplexers MM und des Wellenlängenmultiplexers WM bzw. des Modendemultiplexers MD und des Wellenlängendemultiplexers WD lässt sich vertauschen. In einer weiteren, nicht dargestellten Gestaltung kann daher zunächst ein Zusammenfügen der Wellenlängen in Einmodentechnik in der Senderstation 7 in einer Anzahl von Wellenlängenmultiplexern WM stattfinden und erst danach die Anregung von Moden der Mehrmodenfaser 2 durch die jeweiligen Wellenlängengruppen in einem gemeinsamen Modenmultiplexer MM. In der Empfängerstation 6 werden zunächst die Signalgruppen in einem einzigen Modendemultiplexer MD in unterschiedlichen Moden getrennt und anschließend trennt eine Anzahl von Wellenlängendemultiplexern WD die Signale bei den einzelnen Wellenlängen. Alternativ können auch Modenmultiplexer MM und Wellenlängenmultiplexer WM in einer gemeinsamen Einheit zusammen gefasst werden, analog ist es auch denkbar, Modendemultiplexer MD und Wellenlängendemultiplexer WD in einer gemeinsamen Einheit zusammenzufassen. Weiterhin lässt sich der Modenmultiplexbetrieb mit dem Polarisationsmultiplexbetrieb kombinieren.

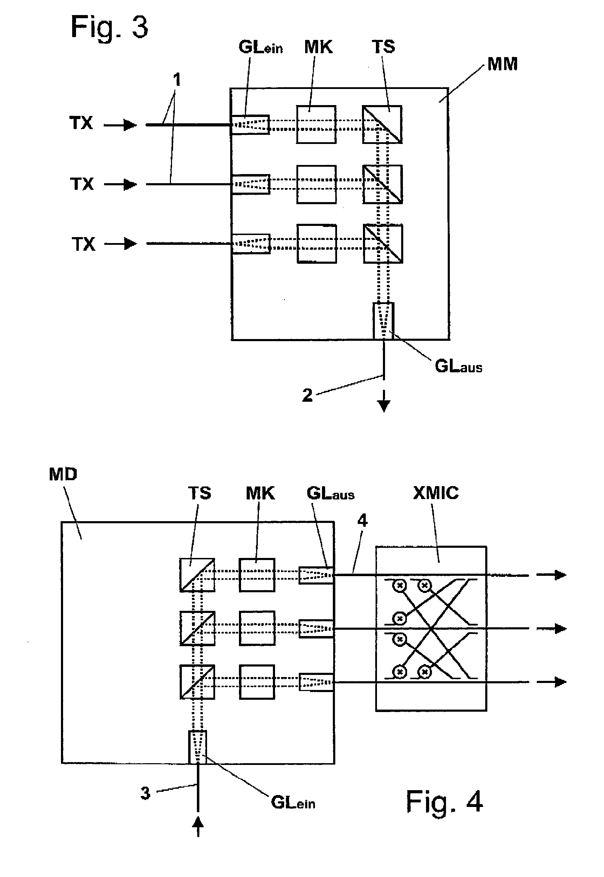

Figur 3 zeigt eine mögliche Ausführungsform und den prinzipiellen Aufbau eines Modenmultiplexers MM. Über die Einmoden-Lichtwellenleiter 1 erfolgt eine Anlieferung der Signale TX im Grundmodus der Einmoden-Lichtwellenleiter 1. Eine Anzahl von Gradientenlinsen Glₑᵢₙ entsprechend der Anzahl der Signale TX wandeln die Feldverteilung am Ausgang der Einmoden-Lichtwellenleiter 1 in parallele Strahlen. In den in entsprechender Anzahl nachgeschalteten Modenkonvertern MK werden die Feldverteilungen der Signale so konvertiert, dass jedes Signal TX nach der Zusammenführung in teildurchlässigen Spiegeln TS und der Fokussierung mit Hilfe der Gradientenlinse GLₐᵤₛ jeweils genau einen Modus des ausgangsseitigen Mehrmoden-Lichtwellenleiters 2 anregt. Die Transformation der Feldverteilung in den Modenkonvertern MK kann beispielsweise mit Hilfe von Hologrammen oder geeigneten räumlichen Filtern erfolgen.

Ein Beispiel für die Ausführung eines Modendemultiplexers MD wird in Fig. 4 dargestellt. Ein Mehrmoden-Lichtwellenleiter 3 liefert unten in der Abbildung die zu trennende Modengruppe von der Senderstation 7 an. Das Ausgangssignal des Mehrmoden-Lichtwellenleiters 3 wird mit Hilfe der Gradientenlinse Glₑᵢₙ in einen parallelen Strahl transformiert, in teildurchlässigen Spiegeln TS vervielfacht und anschließend Modenkonvertern MK zugeführt. Dort findet jeweils die Transformation der Feldverteilung des gewünschten Modus in eine Feldverteilung statt, die nach der Fokussierung in einer zugeordneten Gradientenlinse Glₐᵤₛ den Grundmodus des ausgangsseitigen Einmoden-Lichtwellenleiters 4 anregt. Wenn der Modenkonverter MK die Orthogonalität der Feldverteilungen erhält, koppelt der Modendemultiplexer MD jeden Modus des eingangsseitigen Mehrmoden-Lichtwellenleiters 3 jeweils in genau einen ausgangsseitigen Einmoden-Lichtwellenleiter 4 ein.

Anschließend erfolgt in der gewählten Ausführung eine Trennung der entlang der Übertragungsstrecke durch Modenkopplung entstandenen Interferenzanteile im Kreuzmodeninterferenzauslöscher XMIC. Dieser koppelt pro Eingang einen Teil des Signals aus, multipliziert es mit einem Koeffizienten, der Betrag und Phase des Signals beeinflusst, und führt es einem anderen Ausgang zu. Durch geeignete Wahl der Koeffizienten, die auch wellenlängenabhängig sein können, lassen sich so pro Zweig Anteile der anderen Signale auslöschen, die dem Zweig durch Modenkopplung entlang des Übertragungspfades in dem Mehrmoden-Lichtwellenleiter 3 hinzugefügt wurden.

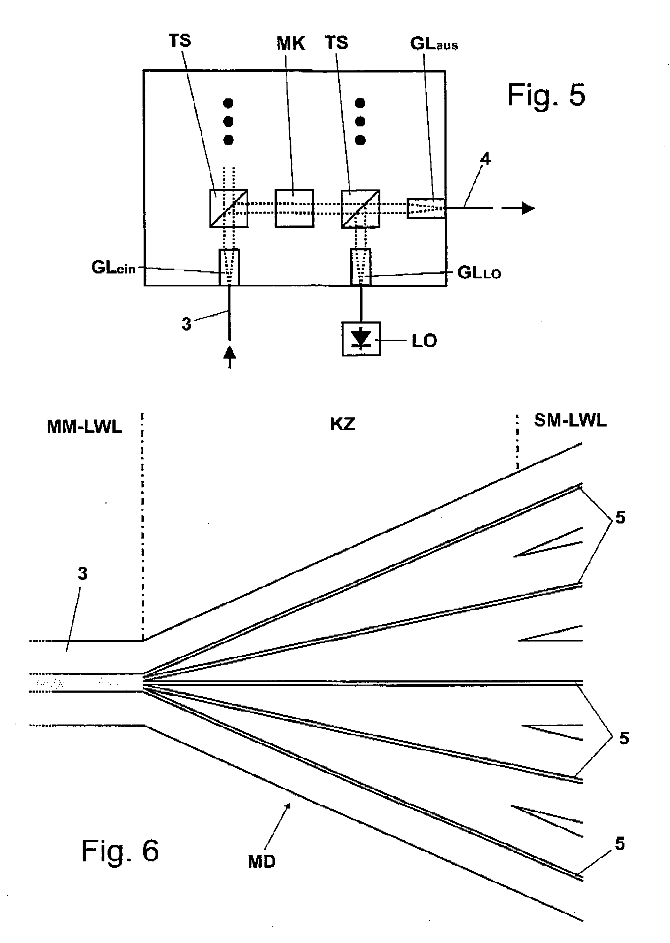

Das Entfernen der Interferenzanteile kann auch nach der Wandlung in die elektrische Ebene erfolgen. Dazu werden in nicht weiter dargestellter Weise die Ausgangssignale des Modendemultiplexers MD mit Hilfe von Überlagerungsempfängern kohärent detektiert und anschließend in digitale Signale gewandelt. Das Auslöschen der Interferenzantelle kann dann ebenfalls nach dem Prinzip des Kreuzmodeninterferenzauslöschers XMIC erfolgen, jedoch mit Hilfe von digitaler Signalverarbeitung. Wie in Figur 5 dargestellt, lässt sich die für die kohärente Detektion erforderliche Überlagerung des Lokaloszillatorsignals mit dem zu detektierenden Signal auch im Modendemultiplexer MD vornehmen. Dazu wird das Ausgangssignal des Lokaloszillators LO in einer Gradientenlinse GL_{LO} in einen parallelen Strahl gewandelt und in einem teildurchlässigen Spiegel TS' mit dem zu detektierenden Signal GLₑᵢₙ zusammengeführt. Anschließend erfolgt die Einkopplung beider Signale in einen Einmoden-Lichtwellenleiter 4 mit Hilfe einer Gradientenlinse GLₐᵤₛ. Zweckmäßigerweise sollte dabei die hier nicht dargestellte Phasendiversität und bei Bedarf auch Polarisationsdiversität zum Einsatz kommen. Weiterhin kann die Zuführung des Signals des Lokaloszillators LO nicht wie hier dargestellt in einer Ebene erfolgen, sondern von oben, also senkrecht zur Zeichnungsebene von oben. Bei genügend hoher zur Verfügung stehender Ausgangsleistung des Lokaloszillators LO ließe sich das Signal des Lokaloszillators LO mit Hilfe von teildurchlässigen Spiegeln TS' aufteilen und mehreren Gradientenlinsen GL_{LO} zuführen. Auf diesem Wege werden weniger Lokaloszillator-Signalquellen benötigt, als Ausgangssignale detektiert werden sollen.

Da beim Ansatz mit kohärenter Detektion bzw. Überlagerungsempfang die Trennung der Signale in der elektrischen Ebene erfolgen kann, bietet sich als Modendemultiplexer MD eine Anordnung an, wie sie in Figur 6 dargestellt ist. Hinter dem Ausgang MM-LWL des Mehrmoden-Lichtwellenleiters 3 folgt von links nach rechts eine Koppelzone KZ. Diese geht schließlich in einem Bereich SM-LWL in eine Anzahl von Einmoden-Lichtwellenleitern 5 über. Dabei muss die Anzahl der abgehenden Einmoden-Lichtwellenleiter 5 so gewählt werden, dass pro in dem Mehrmoden-Lichtwellenleiter 3 geführtem Modus mindestens ein Einmoden-Lichtwellenleiter 5 vorgesehen ist.

In dieser Anordnung regt die zu einem Modus in dem Mehrmoden-Lichtwellenleiter 3 gehörende Feldverteilung im allgemeinen die Grundmoden mehrerer Einmoden-Lichtwellenleiter 5 an. Entsprechend muss nach der kohärenten Detektion in der elektrischen Ebene eine Trennung der Signale erfolgen. Dies kann beispielsweise mit Hilfe eines Kreuzmodeninterferenzauslöschers XMIC erfolgen.

Statt der Wellenleiteranordnung in der Koppelzone KZ kann auch eine Freistrahlanordnung mit Linsen oder anderen abbildenden Elementen wie gekrümmten Spiegeln oder Hologrammen zum Einsatz kommen.

Gegebenenfalls eignet sich eine derartige Anordnung auch als Modenmultiplexer MM zum Anregen der Moden in dem Mehrmoden-Lichtwellenleiter 3 auf der Sendeseite.

Das Modenmultiplexverfahren eignet sich nicht nur für glasfaserbasierte Übertragung, sondern auch für andere Wellenleitertypen wie beispielsweise planare Wellenleiter 3, wenn in diesen mehrere orthogonale Moden ausbreitungsfähig sind.

Weiterhin kann die Übertragung auch rein passiv erfolgen, d.h. ohne optische Verstärkung des übertragenen Modenmultiplex-Signals.

## Patentansprüche

1. Verfahren zur Übertragung optischer Informationen zwischen einer Senderstation (7) und einer Empfängerstation (6) über einen Mehrmoden-Lichtwellenleiter (3) unter Verwendung eines Wellenlängenmultiplex-Verfahrens,
**dadurch gekennzeichnet, dass**
mehrere optische Sender (OS) für jede der zu übertragenden Wellenlängen jeweils ein Signal (TX) erzeugen und diese Signale (TX) in Form einer Anzahl von Moden über Modenmultiplexer (MM) und Wellenlängenmultiplexer (WM) auf den Mehrmoden-Lichtwellenleiter (3) aufgeschaltet werden, wobei der Mehrmoden-Lichtwellenleiter (3) für jede der zu übertragenden Moden einen eigenen ausbreitungsfähigen Modus innerhalb des Mehrmoden-Lichtwellenleiters (3) aufweist,
nach Übertragung und ggf. Regeneration und/oder Verstärkung des Signals über den Mehrmoden-Lichtwellenleiter (3) die übertragenen Signale über Wellenlängendemultiplexer (WD) in Gruppen von Signalen gleicher Wellenlänge und über Modendemultiplexer (MD) in Signale gleichen Modus aufgespalten werden,
aus den übertragenen demultiplexten Signalen (RX) die Interferenzsignale entfernt werden, die durch das Überkoppeln zwischen den einzelnen Moden bei der Übertragung über den Mehrmoden-Lichtwellenleiter (3) entstanden sind.

2. Verfahren gemäß Anspruch 1, **dadurch gekennzeichnet, dass** beim Multiplexen die Signale (TX) für jede der zu übertragenden Wellenlängen entweder zuerst auf eine Anzahl von Modenmultiplexern (MM) und anschließend auf einen gemeinsamen Wellenlängenmultiplexer (WM) oder zuerst auf Wellenlängenmultiplexer (WM) und anschließend auf einen gemeinsamen Modenmultiplexer (MM) aufgeschaltet werden.

3. Verfahren gemäß Anspruch 2, **dadurch gekennzeichnet, dass** die Signale (TX) zum Multiplexen in den Modenmultiplexern (MM) und/oder in den Wellenlängenmultiplexern (WM) jeweils im Grundmodus eines Einmoden-Lichtwellenleiters (1) den Modenmultiplexern (MM) oder in Form eines Freistrahls zugeführt werden.

4. Verfahren gemäß Anspruch 3, **dadurch gekennzeichnet, dass** in den Modenmultiplexern (MM) eine Transformation der Feldverteilungen stattfindet, bei der jedes ankommende Signal (TX) jeweils einen Modus der ausgangsseitig der Modenmultiplexer (MM) angeordneten Mehrmoden-Lichtwellenleiters (3) anregt.

5. Verfahren gemäß einem der Ansprüche 3 oder 4, **dadurch gekennzeichnet, dass** in den Mehrmoden-Lichtwellenleitern (3) zwischen Modenmultiplexern (MM) und Wellenlängenmultiplexer (WM) mindestens so viele Moden ausbreitungsfähig sind, wie Signale (TX) zwischen Modenmultiplexern (MM) und Wellenlängenmultiplexer (WM) übertragen werden sollen.

6. Verfahren gemäß Anspruch 5, **dadurch gekennzeichnet, dass** der Mehrmoden-Lichtwellenleiter (3) zwischen Modenmultiplexern (MM) und Wellenlängenmultiplexer (WM) die zusammengemultiplexten Signale über Trägersignale überträgt, die alle dieselbe Wellenlänge aufweisen.

7. Verfahren gemäß einem der Ansprüche 2 bis 6, **dadurch gekennzeichnet, dass** im Wellenlängenmultiplexer (WM) alle Signalgruppen bei den verschiedenen Wellenlängen in einem einzigen Mehrmoden-Lichtwellenleiter (3) für die Übertragung an die Empfängerstation (6) zusammengeführt werden.

8. Verfahren gemäß einem der vorstehenden Ansprüche, **dadurch gekennzeichnet, dass** in dem den Wellenlängenmultiplexern (WM) nachgeschalteten Modenmultiplexer (MM) eine Anregung der Moden eines Mehrmoden-Lichtwellenleiters (3) durch die jeweiligen von den Wellenlängenmultiplexern (WM) erzeugten Wellenlängengruppen stattfindet.

9. Verfahren gemäß Anspruch 1, **dadurch gekennzeichnet, dass** beim Demultiplexen die übertragenen Signale entweder zuerst auf einen Wellenlängendemultiplexer (WD) und anschließend auf eine Anzahl von Modendemultiplexern (MD) oder zuerst auf einen Modendemultiplexer (MD) und anschließend auf eine Anzahl von Wellenlängendemultiplexern (WD), aufgeschaltet werden, wobei der Wellenlängendemultiplexer (WD) vorzugsweise die Kanalgruppen bei den einzelnen Wellenlängen trennt und jeweils eine Gruppe von Kanälen mit gleicher Wellenlänge über Mehrmoden-Lichtwellenleiter (4) den Modendemultiplexern (MM) zuführt.

10. Verfahren gemäß einem der vorstehenden Ansprüche, **dadurch gekennzeichnet, dass** die optische Verstärkung und Übertragung der Signale über den Mehrmoden-Lichtwellenleiters (3) zwischen Senderstation (7) und Empfängerstation (6) in Mehrmodentechnik erfolgt, wobei der Mehrmoden-Lichtwellenleiter (3) insbesondere entweder durch Vergrößerung des Kerndurchmessers und/oder eine Anhebung des Indexsprungs an der Kern-Mantel-Grenze eine erhöhte Anzahl geführter Moden in einem Stufen-Lichtwellenleiter (3), oder durch Vergrößerung des Faserparameters V bei ungleich geformten Brechzahlprofilen eine erhöhte Anzahl geführter Moden aufweist.

11. Verfahren gemäß einem der vorstehenden Ansprüche, **dadurch gekennzeichnet, dass** das Verfahren jeden ausbreitungsfähigen Modus des Mehrmoden-Lichtwellenleiters (3) zwischen Senderstation (7) und Empfängerstation (6) zur Übertragung eines eigenen Signals (TX) bzw. Kanals nutzt, ggf. kombiniert mit einem Polarisationsmultiplexbetrieb.

12. Vorrichtung zur Übertragung optischer Informationen zwischen einer Senderstation (7) und einer Empfängerstation (6) über einen Mehrmoden-Lichtwellenleiter (3) unter Verwendung eines Wellenlängenmultiplex-Verfahrens, insbesondere zur Durchführung des Verfahrens nach Anspruch 1, **dadurch gekennzeichnet, dass**
die Vorrichtung eine Senderstation (7) mit mehreren optischen Sendern (OS) für jede der zu übertragenden Wellenlängen aufweist, die jeweils ein Signal (TX) erzeugen und diese Signale (TX) über Modenmultiplexer (MM) und Wellenlängenmultiplexer (WM) auf den Mehrmoden-Lichtwellenleiter (3) aufschalten, wobei der Mehrmoden-Lichtwellenleiter (3) für jede der zu übertragenden Moden einen eigenen ausbreitungsfähigen Modus innerhalb des Mehrmoden-Lichtwellenleiters (3) aufweist,
die Vorrichtung eine Empfängerstation (6) mit mehreren optischen Empfängern (OE) aufweist, die die übertragenen Signale (RX) über Wellenlängendemultiplexer (WD) in Gruppen von Signalen gleicher Wellenlänge und über Modendemultiplexer (MD) in Signale gleichen Modus aufspalten.

13. Vorrichtung gemäß Anspruch 12, **dadurch gekennzeichnet, dass** die Senderstation (7) zum Multiplexen der Signale (TX) für jede der zu übertragenden Wellenlängen oder Wellenlängenkanäle entweder je einen Modenmultiplexer (MM) und einen gemeinsamen Wellenlängenmultiplexer (WD) oder je einen Wellenlängenmultiplexer (WM) und einen gemeinsamen Modenmultiplexer (MM) aufweist, der die Ausgangssignale (TX') der Modenmultiplexer (MM) verarbeitet.

14. Vorrichtung gemäß Anspruch 12, **dadurch gekennzeichnet, dass** die Empfängerstation (6) zum Demultiplexen der Signale (RX) für alle übertragenen Wellenlängen oder Wellenlängenkanäle entweder einen gemeinsamen Wellenlängendemultiplexer (WD) und eine Anzahl von Modendemultiplexern (MM) oder einen gemeinsamen Modendemultiplexer (MD) und eine Anzahl von Wellenlängendemultiplexern (WD) aufweist, die die Ausgangssignale (RX') des Wellenlängendemultiplexers (W D) verarbeitet.

15. Vorrichtung gemäß einem der Ansprüche 12 bis 14, **dadurch gekennzeichnet, dass** der Modenmultiplexer (MM) eingangsseitig eine der Anzahl der zu übertragenden Signalkanäle entsprechende Anzahl von Gradientenlinsen (GLₑᵢₙ) aufweist, die die Feldverteilung der Signale (TX) im Grundmodus von Einmoden-Lichtwellenleitern (1) in parallele Strahlen umwandeln, und den Gradientenlinsen (Glₑᵢₙ) Modenkonverter (MK) nachgeschaltet sind, die die Feldverteilungen der Signale (TX) derart konvertieren, dass jedes Signal nach der Zusammenführung in teildurchlässigen Spiegeln (TS) und der Fokussierung mit Hilfe einer nachgeschalteten Gradientenlinse (GLₐᵤₛ) jeweils genau einen Modus des ausgangsseitig des Modenmultiplexers (MM) angeordneten Mehrmoden-Lichtwellenleiters (2) anregt, wobei in den Modenkonvertern (MK) vorzugsweise Hologramme oder geeignete räumliche Filter vorhanden sind, mit denen die Transformation der Feldverteilung erfolgt.

16. Vorrichtung gemäß einem der Ansprüche 12 oder 14, **dadurch gekennzeichnet, dass** der Modendemultiplexer (MM) eine eingangsseitige Gradientenlinse (Glₑᵢₙ) aufweist, die das Ausgangssignal des Mehrmoden-Lichtwellenleiters (3) in einen parallelen Strahl transformiert, der Gradientenlinse (Glₑᵢₙ) teildurchlässige Spiegel (TS) nachgeschaltet sind, die den parallelen Strahl vervielfachen und Modenkonvertern (MK) zuführen, die jeweils die Transformation der Feldverteilung des gewünschten Modus in eine Feldverteilung vornehmen, die nach der Fokussierung in einer nachgeschalteten Gradientenlinse (Glₐᵤₛ) den Grundmodus des ausgangsseitigen Einmoden-Lichtwellenleiters (4) anregen, wobei die Modenkonverter (MK) insbesondere derart ausgebildet sind, dass sie die Orthogonalität der Feldverteilungen erhalten.

17. Vorrichtung gemäß Anspruch 16, **dadurch gekennzeichnet, dass** der Modendemultiplexer (MM) jeden Modus des eingangsseitigen Mehrmoden-Lichtwellenleiters (3) jeweils in genau einen ausgangsseitigen Einmoden-Lichtwellenleiter (4) einkoppelt.

18. Vorrichtung gemäß einem der Ansprüche 16 oder 17, **dadurch gekennzeichnet, dass** dem Modendemultiplexer (MM) ein Kreuzmodeninterferenzauslöscher (XMIC) nachgeschaltet ist, der eine Trennung der entlang der Übertragungsstrecke (3) durch Modenkopplung entstandenen Interferenzanteile vornimmt, wobei insbesondere der Kreuzmodeninterferenzauslöscher (XMIC) pro Eingang einen Teil des Signals auskoppelt, es mit einem Koeffizienten, der Betrag und Phase des Signals beeinflusst, multipliziert und es einem anderen Ausgang zuführt.

19. Vorrichtung gemäß einem der Ansprüche 16 bis 18, **dadurch gekennzeichnet, dass** dem Modendemultiplexer (MM) eine elektrische Baugruppe nachgeschaltet ist, die aus den demultiplexten Signalen nach der Wandlung in die elektrische Ebene die Interferenzanteile dadurch entfernt, dass die Ausgangssignale des Modendemultiplexers (MM) mit Hilfe von Überlagerungsempfängern kohärent detektiert und anschließend in digitale Signale gewandelt werden, wobei in der elektrischen Baugruppe insbesondere Mittel zur digitalen Signalverarbeitung vorgesehen sind, die das Auslöschen der Interferenzanteile nach dem Prinzip des Kreuzmodeninterterenzauslöschers durchführen.

20. Vorrichtung gemäß einem der Ansprüche 12 bis 19, **dadurch gekennzeichnet, dass** eine Wellenleiteranordnung zur kohärenten Detektion hinter dem Ausgang (MM-LWL) des Mehrmoden-Lichtwellenleiters (3) mit einer Koppelzone (KZ) angeordnet ist, die in eine Anzahl von Einmoden-Lichtwellenleiter (SM-LWL) übergeht, wobei insbesondere die Anzahl der abgehenden Einmoden-Lichtwellenleiter (SM-LWL) so gewählt ist, dass pro in dem Mehrmoden-Lichtwellenleiter (MM-LWL) geführtem Modus mindestens ein Einmoden-Lichtwellenleiter (SM-LWL) vorgesehen ist.

21. Vorrichtung gemäß Anspruch 20, **dadurch gekennzeichnet, dass** eine elektrische Schaltung vorgesehen ist, die eine Trennung der Signale nach der kohärenten Detektion durchführt, vorzugsweise mit Hilfe eines Kreuzmodeninterferenzauslöschers (XMIC).

22. Vorrichtung gemäß einem der Ansprüche 20 oder 21, **dadurch gekennzeichnet, dass** in der Koppelzone (KZ) eine Freistrahlanordnung mit Linsen oder anderen abbildenden Elementen wie gekrümmten Spiegeln oder Hologrammen vorgesehen ist.

23. Vorrichtung gemäß einem der Ansprüche 16 bis 21, **dadurch gekennzeichnet, dass** der Modendemultiplexer (MM) die Überlagerung des Signals des Lokaloszillators (LO) mit dem zu detektierenden Signal durchführt, wobei das Signal des Lokaloszillators (LO) entweder senkrecht zu der Ebene der Strahlführung der anderen Signale in dem Modendemultiplexer (MM) oder mit Hilfe von teildurchlässigen Spiegeln (TS) aufteilbar und mehreren Gradientenlinsen (GL_{LO}) zuführbar ist.

24. Vorrichtung gemäß einem der Ansprüche 12 bis 23, **dadurch gekennzeichnet, dass** eine Gradientenlinse (GL_{LO}) vorgesehen ist, die das Ausgangssignal des Lokaloszillators (LO) in einen parallelen Strahl wandelt und in einem teildurchlässigen Spiegel (TS) mit dem zu detektierenden Signal zusammenführt, wobei anschließend die Einkopplung beider Signale mit Hilfe einer Gradientenlinse (GLₐᵤₛ) in einen Einmoden-Lichtwellenleiter (4) erfolgt, wobei insbesondeer Phasendiversität und/oder Polarisationsdiversität realisiert ist.

## Claims

1. Method for transmission of optical data between a transmitter station (7) and a receiver station (6), by way of a multi-mode light waveguide (3), using a wavelength multiplex method,
**characterized in that**
multiple optical transmitters (OS) generate a signal (TX), in each instance, for each of the wavelengths to be transmitted, and these signals (TX) are applied, in the form of a plurality of modes, to the multi-mode light waveguide (3), by way of mode multiplexer(s) (MM) and wavelength multiplexer(s) (WM), wherein the multi-mode light waveguide (3) has a separate mode capable of propagation within the multi-mode light waveguide (3) for each of the modes to be transmitted,
after transmission and, if applicable, regeneration and/or amplification of the signal by way of the multi-mode light waveguide (3), the transmitted signals are split up into groups of signals having the same wavelength, by way of wavelength demultiplexer(s) (WD), and into signals having the same mode, by way of mode demultiplexer(s) (MD),
the interference signals that resulted from over-coupling between the individual modes during transmission by way of the multi-mode light waveguide (3) are removed from the transmitted demultiplexed signals (RX).

2. Method according to claim 1, **characterized in that** during multiplexing, the signals (TX) for each of the wavelengths to be transmitted are either first applied to a number of mode multiplexers (MM) and subsequently to a common wavelength multiplexer (WM) or are first applied to a wavelength multiplexer (WM) and subsequently to a common mode multiplexer (MM).

3. Method according to claim 2, **characterized in that** the signals (TX) for multiplexing in the mode multiplexers (MM) and/or in the wavelength multiplexers (WM) are in each instance passed to the mode multiplexers (MM) in the basic mode of a single-mode light waveguide (1) or in the form of a free beam.

4. Method according to claim 3, **characterized in that** transformation of the field distributions takes place in the mode multiplexers (MM), during which each incoming signal (TX) excites a mode of the multi-mode light waveguide (3) disposed on the output side of the mode multiplexer (MM), in each instance.

5. Method according to one of the claims 3 or 4, **characterized in that** at least as many modes are capable of propagation in the multi-mode light waveguides (3), between mode multiplexers (MM) and wavelength multiplexer (WM), as the number of signals (TX) to be transmitted between mode multiplexers (MM) and wavelength multiplexer (WM).

6. Method according to claim 5, **characterized in that** the multi-mode light waveguide (3) transmits the signals that have been multiplexed together and that all have the same wavelength, between mode multiplexers (MM) and wavelength multiplexer (WM) by means of carrier signals.

7. Method according to one of the claims 2 to 6, **characterized in that** in the wavelength multiplexer (WM) all the signal groups at the different wavelengths are brought together in one single multi-mode light waveguide (3), for transmission to the receiver station (6).

8. Method according to one of the preceding claims, **characterized in that** excitation of the modes of a multi-mode light waveguide (3) by the wavelength groups generated by the wavelength multiplexers (WM), in each instance, takes place in the mode multiplexer (MM) that follows the wavelength multiplexers (WM).

9. Method according to claim 1, **characterized in that** during demultiplexing, the transmitted signals are either first applied to a wavelength demultiplexer (WD) and subsequently to a number of mode demultiplexers (MD) or first applied to a mode demultiplexer (MD) and subsequently to a number of wavelength demultiplexers (WD), wherein the wavelength demultiplexer (WD) prefereably separates the channel groups at the individual wavelengths, and passes a group of channels having the same wavelength, in each instance, to the mode demultiplexers (MD) by way of multi-mode light waveguides 4.

10. Method according to one of the preceding claims, **characterized in that** optical amplification and transmission of the signals takes place in multi-mode technology, by way of the multi-mode light waveguide (3), between transmitter station (7) and receiver station (6), wherein the multi-mode light waveguide (3) especially has either an increased number of carried modes in a step light waveguide (3), by means of an increase in the core diameter and/or an increase in the index jump at the core/mantle boundary, or has an increased number of carried modes by means of an increase in the size of the fiber parameter V, in the case of index of refraction profiles having dissimilar shapes.

11. Method according to one of the preceding claims, **characterized in that** the method utilizes every mode of the multi-mode light waveguide (3) that is capable of propagation, between transmitter station (7) and receiver station (6), for transmission of a separate signal (TX) or channel, if applicable combined with polarization multiplex operation.

12. Device for transmission of optical data between a transmitter station (7) and a receiver station (6), by way of a multi-mode light waveguide (3), using a wavelength multiplex method, particularly for implementing the method according to claim 1,
**characterized in that**
the device has a transmitter station (7) having multiple optical transmitters (OS) for each of the wavelengths to be transmitted, which transmitters each produce a signal (TX) and apply these signals (TX) to the multi-mode light waveguide (3) by way of mode multiplexers (MM) and wavelength multiplexers (WM), wherein the multi-mode light waveguide (3) has a separate mode capable of propagation within the multi-mode light waveguide (3) for each of the modes to be transmitted,
the device has a receiver station (6) having multiple optical receivers (OE) that split the transmitted signals (RX) up into groups of signals having the same wavelength, by way of wavelength demultiplexers (WD), and into signals having the same mode, by way of mode demultiplexers (MD).

13. Device according to claim 12, **characterized in that** the transmitter station (7) for multiplexing the signals (TX) for each of the wavelengths or wavelength channels to be transmitted has either a mode multiplexer (MM), in each instance, and a common wavelength multiplexer (WD) or a wavelength multiplexer (WM) and a common mode multiplexer (MM) that processes the output signals (TX') of the mode multiplexers (MM).

14. Device according to claim 12, **characterized in that** the receiver station (6) for demultiplexing the signals (RX) for all the transmitted wavelengths or wavelength channels has either a common wavelength demultiplexer (WD) and a number of mode demultiplexers (MM) or a common mode demultiplexer (MD) and a number of wavelength demultiplexers (WD) that process the output signals (RX') of the wavelength demultiplexer (WD).

15. Device according to one of claims 12 to 14, **characterized in that** the mode multiplexer (MM) has a number of gradient lenses (GLₑᵢₙ) on the input side that corresponds to the number of signal channels to be transmitted, which lenses convert the field distribution of the signals (TX) in the basic mode of single-mode light waveguides (1) into parallel beams, and that mode converters (MK) follow the gradient lenses (GLₑᵢₙ), which convert the field distribution of the signals (TX) in such a manner that each signal, after they are brought together in semi-transparent mirrors (TS) and focused using a subsequent gradient lens (GLₐᵤₛ), excites precisely one mode of the multi-mode light waveguide (2) disposed on the output side of the mode multiplexer (MM), wherein preferably holograms or suitable spatial filters are present in the mode converters (MK), with which transformation of the field distribution takes place.

16. Device according to one of claims 12 or 14, **characterized in that** the mode multiplexer (MM) has a gradient lens Glₑᵢₙ on the input side that transforms the output signal of the multi-mode waveguide (3) into a parallel beam, that semi-transparent mirrors (TS) follow the gradient lens (Glₑᵢₙ), which multiply the parallel beam and pass it to mode converters (MK) that undertake transformation of the field distribution of the desired mode into a field distribution that excite the basic mode of the single-mode light waveguide (4) on the output side after focusing in a subsequent gradient lens (Glₐᵤₛ), wherein the mode converters (MK) are especially configured in such a manner that they maintain the orthogonality of the field distributions.

17. Device according to claim 16, **characterized in that** the mode demultiplexer (MD) couples each mode of the multi-mode light waveguide (3) on the input side into precisely one single-mode light waveguide (4) on the output side, in each instance.

18. Device according to one of claims 16 or 17, **characterized in that** the mode demultiplexer (MD) is followed by a cross-mode interference canceller (XMIC), which undertakes separation of the interference components that occurred along the transmission segment (3), by means of mode coupling, wherein especially the cross-mode interference canceller (XMIC) uncouples part of the signal per input, multiplies it by a coefficient that influences the amount and the phase of the signal, and passes it to another output.

19. Device according to one of claims 16 to 18, **characterized in that** an electrical module follows the mode demultiplexer (MD), which removes the interference components from the demultiplexed signals after conversion to the electrical plane, **in that** the output signals of the mode demultiplexer (MD) are coherently detected using superimposition receivers, and subsequently converted to digital signals, wherein means for digital signal processing are provided in the electrical module, which means perform cancellation of the interference components in accordance with the principle of the cross-mode interference canceller.

20. Device according to one of claims 12 to 19, **characterized in that** a waveguide arrangement for coherent detection is disposed behind the output (MM-LWL) of the multi-mode light waveguide (3), having a coupling zone (KZ), which arrangement makes a transition into a number of single-mode light waveguides (SM-LWL), wherein especially the number of outgoing single-mode light waveguides (SM-LWL) is selected in such a manner that at least one single-mode light waveguide (SM-LWL) is provided per mode carried in the multi-mode light waveguide (MM-LWL).

21. Device according to claim 20, **characterized in that** an electrical circuit is provided, which performs separation of the signals after coherent detection, preferably using a cross-mode interference canceller (XMIC).

22. Device according to one of claims 20 or 21, **characterized in that** a free-beam arrangement having lenses or other imaging elements such as curved mirrors or holograms is provided in the coupling zone (KZ).

23. Device according to one of claims 16 to 21, **characterized in that** the mode demultiplexer (MD) performs superimposition of the signal of the local oscillator (LO) with the signal to be detected, wherein the signal of the local oscillator (LO) can either be passed in perpendicular to the plane of the beam guidance of the other signals in the mode demultiplexer (MD) or is divided up using semi-transparent mirrors (TS) and passed to multiple gradient lenses (GL_{LO}).

24. Device according to one of the claims 12 to 23, **characterized in that** a gradient lens (GL_{LO}) is provided, which converts the output signal of the local oscillator (LO) into a parallel beam and brings it together with the signal to be detected in a semi-transparent mirror (TS), wherein subsequently coupling the two signals into a single-mode light waveguide (4) takes place using a gradient lens (GLₐᵤₛ), wherein particularly the device implements phase diversity and/or polarization diversity.

## Revendications

1. Procédé de transmission d'informations optiques entre une station d'émission (7) et une station de réception (6) par l'intermédiaire d'un guide d'ondes optiques multimodal (3) en utilisant un procédé de multiplexage de longueurs d'onde,
**caractérisé en ce que**
plusieurs émetteurs optiques (OS) génèrent respectivement un signal (TX) pour chacune des longueurs d'onde à transmettre et ces signaux (TX) sous forme d'un certain nombre de modes par le biais de multiplexeurs de modes (MM) et de multiplexeurs de longueurs d'onde (WM) sont appliqués au guide d'ondes optiques multimodal (3), le guide d'ondes optiques multimodal (3) comportant pour chacun des modes à transmettre un mode propre pouvant être propagé à l'intérieur du guide d'ondes optiques multimodal (3),
après la transmission et, le cas échéant, la régénération et/ou l'amplification du signal par l'intermédiaire du guide d'ondes optiques multimodal (3), les signaux transmis sont répartis par l'intermédiaire de démultiplexeurs de longueurs d'onde (WD) dans des groupes de signaux de même longueur d'onde et sont répartis par l'intermédiaire de démultiplexeurs de modes (MD) en des signaux de même mode,
les signaux d'interférence, qui sont apparus par le surcouplage entre les différents modes lors de la transmission par l'intermédiaire du guide d'ondes optiques multimodal (3), sont supprimés des signaux transmis (RX) démultiplexés.

2. Procédé selon la revendication 1, **caractérisé en ce que**, lors du multiplexage, les signaux (TX) sont appliqués pour chacune des longueurs d'onde à transmettre soit d'abord à un certain nombre de multiplexeurs de modes (MM) et ensuite à un multiplexeur de longueurs d'onde (WM) commun, soit d'abord à des multiplexeurs de longueurs d'onde (WM) et ensuite à un multiplexeur de modes (MM) commun.

3. Procédé selon la revendication 2, **caractérisé en ce que** les signaux (TX) pour le multiplexage dans les multiplexeurs de modes (MM) et/ou dans les multiplexeurs de longueurs d'onde (WM) sont amenés respectivement aux multiplexeurs de modes (MM) dans le mode de base d'un guide d'ondes optiques monomodal (1) ou sous forme d'un faisceau libre.

4. Procédé selon la revendication 3, **caractérisé en ce que** dans les multiplexeurs de modes (MM) est effectuée une transformation des répartitions de champ, dans lequel chaque signal arrivant (TX) excite respectivement un mode du guide d'ondes optiques multimodal (3) disposé en sortie des multiplexeurs de modes (MM).

5. Procédé selon l'une quelconque des revendications 3 ou 4, **caractérisé en ce que** dans les guides d'onde optique multimodaux (3) entre les multiplexeurs de modes (MM) et le multiplexeur de longueurs d'onde (WM) au moins autant de modes peuvent être propagés que de signaux (TX) qui doivent être transmis entre les multiplexeurs de modes (MM) et le multiplexeur de longueurs d'onde (WM).

6. Procédé selon la revendication 5, **caractérisé en ce que** le guide d'ondes optiques multimodal (3) transmet entre les multiplexeurs de modes (MM) et le multiplexeur de longueurs d'onde (WM) les signaux multiplexés ensemble par le biais de signaux de porteuse qui présentent tous la même longueur d'onde.

7. Procédé selon l'une quelconque des revendications 2 à 6, **caractérisé en ce que**, dans le multiplexeur de longueurs d'onde (WM), tous les groupes de signaux aux différentes longueurs d'onde sont rassemblés dans un seul guide d'ondes optiques multimodal (3) en vue de la transmission à la station de réception (6).

8. Procédé selon l'une quelconque des revendications précédentes, **caractérisé en ce que**, dans le multiplexeur de modes (MM) monté en aval des multiplexeurs de longueurs d'onde (WM), une excitation des modes d'un guide d'ondes optiques multimodal (3) a lieu par le biais des groupes de longueurs d'onde respectifs générés par les multiplexeurs de longueurs d'onde (WM).

9. Procédé selon la revendication 1, **caractérisé en ce que**, lors du démultiplexage, les signaux transmis sont appliqués soit d'abord à un démultiplexeur de longueurs d'onde (WD) et ensuite à un certain nombre de démultiplexeurs de modes (MD), soit d'abord à un démultiplexeur de modes (MD) et ensuite à un certain nombre de démultiplexeurs de longueurs d'onde (WD), le démultiplexeur de longueurs d'onde (WD) séparant de préférence les groupes de canaux selon les différentes longueurs d'onde et chaque groupe de canaux de même longueur d'onde est amené aux multiplexeurs de modes (MM) par l'intermédiaire du guide d'ondes optiques multimodal (4).

10. Procédé selon l'une quelconque des revendications précédentes, **caractérisé en ce que** l'amplification et la transmission optique des signaux par l'intermédiaire du guide d'ondes optiques multimodal (3) sont effectuées entre une station d'émission (7) et une station de réception (6) selon une technique multimodale, le guide d'ondes optiques multimodal (3) en particulier soit comporte un nombre accru de modes exécutés dans un guide d'ondes optiques à étages (3) par un agrandissement du diamètre du noyau et/ou une élévation du saut d'indice à la limite de l'enveloppe du noyau, soit comporte un nombre accru de modes exécutés par agrandissement du paramètre de fibre V avec des profils d'indice de réfraction formés de manière non identique.

11. Procédé selon l'une quelconque des revendications précédentes, **caractérisé en ce que** le procédé utilise chaque mode pouvant être propagé du guide d'ondes optiques multimodal (3) entre la station d'émission (7) et la station de réception (6) en vue de la transmission d'un signal (TX)
respectivement canal propre, le cas échéant en combinaison avec un mode de multiplexage de polarisation.

12. Dispositif de transmission d'informations optiques entre une station d'émission (7) et une station de réception (6) par l'intermédiaire d'un guide d'ondes optiques multimodal (3) à l'aide d'un procédé de multiplexage de longueurs d'onde, en particulier en vue de l'exécution du procédé selon la revendication 1,
**caractérisé en ce que**
le dispositif comporte une station d'émission (7) qui est pourvue, pour chacune des longueurs d'onde à transmettre, de plusieurs émetteurs optiques (OS) qui génèrent chacun un signal (TX) et ces signaux (TX) sont appliqués par le biais de multiplexeurs de modes (MM) et de multiplexeurs de longueurs d'onde (WM) au guide d'ondes optiques multimodal (3), le guide d'ondes optiques multimodal (3) comportant pour chacun des modes à transmettre un mode propre pouvant être propagé à l'intérieur du guide d'ondes optiques multimodal (3),
le dispositif comporte une station de réception (6) pourvue de plusieurs récepteurs optiques (OE) qui répartissent les signaux transmis (RX) par le biais de démultiplexeurs de longueurs d'onde (WD) en des groupes de signaux de même longueur d'onde et par le biais de démultiplexeurs de modes (MD) en des signaux de même mode.

13. Dispositif selon la revendication 12, **caractérisé en ce que** la station d'émission (7) comporte pour le multiplexage des signaux (TX) pour chaque longueur d'onde ou chaque canal de longueur d'onde à transmettre soit un multiplexeur de modes (MM) respectif et un multiplexeur de longueurs d'onde (WD) commun, soit un multiplexeur de longueurs d'onde (WM) respectif et un multiplexeur de modes (MM) commun, qui traite les signaux de sortie (TX') des multiplexeurs de modes (MM).

14. Dispositif selon la revendication 12, **caractérisé en ce que** la station de réception (6) pour le démultiplexage des signaux (RX) comporte pour toutes les longueurs d'onde ou tous les canaux de longueurs d'onde transmis soit un démultiplexeur de longueurs d'onde (WD) commun et un certain nombre de démultiplexeurs de modes (MM), soit un démultiplexeur de modes (MD) commun et un certain nombre de démultiplexeurs de longueurs d'onde (WD) qui traitent les signaux de sortie (RX) du démultiplexeur de longueurs d'onde (WD).

15. Dispositif selon l'une quelconque des revendications 12 à 14, **caractérisé en ce que** le multiplexeur de modes (MM) comporte en entrée un nombre de lentilles à gradient d'indice (GLein) correspondant au nombre de canaux de signaux à transmettre, lesquelles lentilles convertissant la répartition de champ des signaux (TX) dans le mode de base de guides d'onde optique monomodaux (1) en des faisceaux parallèles tandis qu'en aval des lentilles à gradient d'indice (GLein) sont montés des convertisseurs de mode (MK) qui convertissent les répartitions de champs des signaux (TX) de manière telle que chaque signal, après le regroupement dans des miroirs partiellement transparents (TS) et la focalisation à l'aide d'une lentille à gradient d'indice (GLaus) montée en aval, excite précisément un mode du guide d'ondes optiques multimodal (2) disposé en sortie du multiplexeur de modes (MM), dans les convertisseurs de modes (MK) étant présents de préférence des hologrammes ou des filtres spatiaux appropriés avec lesquels est effectuée la transformation de la répartition du champ.

16. Dispositif selon l'une quelconque des revendications 12 ou 14, **caractérisé en ce que** le démultiplexeur de modes (MM) comporte en entrée une lentille à gradient d'indice (GLein) qui transforme le signal de sortie du guide d'ondes optiques multimodal (3) en un faisceau parallèle, **en ce qu'**en aval de la lentille à gradient d'indice (GLein) sont montés des miroirs partiellement transparents (TS) qui multiplient le faisceau parallèle et l'amènent aux convertisseurs de mode (MK) qui réalisent la transformation de la répartition du champ du mode souhaité en une répartition du champ qui, après la focalisation dans une lentille à gradient d'indice (GLaus) montée en aval, excite le mode de base du guide d'ondes optiques monomodal monté en sortie (4), les convertisseurs de mode (MK) étant conçus en particulier de manière telle qu'ils conservent l'orthogonalité des répartitions de champ.

17. Dispositif selon la revendication 16, **caractérisé en ce que** le démultiplexeur de modes (MM) couple chaque mode du guide d'ondes optiques multimodal monté en entrée (3) dans précisément un guide d'ondes optiques monomodal monté en sortie (4).

18. Dispositif selon l'une quelconque des revendications 16 ou 17, **caractérisé en ce que** derrière le démultiplexeur de modes (MM) est monté un suppresseur d'interférences de mode croisées (XMIC) qui réalise une séparation des parties d'interférences apparues le long de la section de transmission (3) par couplage des modes, pour cela, le suppresseur d'interférences de mode croisées (XMIC) découple en particulier par entrée une partie du signal, la multiplie par un coefficient, qui influe sur le module et la phase du signal, et l'amène à une autre sortie.

19. Dispositif selon l'une quelconque des revendications 16 à 18, **caractérisé en ce que** derrière le démultiplexeur de modes (MM) est monté un sous-ensemble électrique qui, après la conversion dans le plan électrique, supprime les parties d'interférence des signaux démultiplexés par le fait que les signaux de sortie du démultiplexeur de modes (MM) sont détectés de manière cohérente à l'aide de récepteurs superhétérodynes et qu'ils sont ensuite transformés en des signaux numériques, dans le sous-ensemble électrique étant prévus en particulier des moyens qui servent au traitement numérique des signaux et qui effectuent la suppression des parties d'interférences selon le principe du suppresseur d'interférences de mode croisées.

20. Dispositif selon l'une quelconque des revendications 12 à 19, **caractérisé en ce qu'**un dispositif de guide d'onde servant à la détection cohérente est disposé derrière la sortie (MM-LWL) du guide d'ondes optiques multimodal (3) avec une zone de couplage (KZ) qui se transforme en un certain nombre de guides d'ondes optiques monomodaux (SM-LWL), en particulier le nombre de guides d'ondes optiques monomodaux partant (SM-LWL) étant choisi de sorte qu'il soit prévu au moins un guide d'ondes optiques monomodal (SM-LWL) par mode exécuté dans le guide d'ondes optiques multimodal (MM-LWL).

21. Dispositif selon la revendication 20, **caractérisé en ce qu'**il est prévu un circuit électrique qui effectue une séparation des signaux après la détection cohérente, de préférence à l'aide d'un suppresseur d'interférences de mode croisées (XMIC).

22. Dispositif selon l'une quelconque des revendications 20 ou 21, **caractérisé en ce que**, dans la zone de couplage (KZ), est prévu un dispositif de faisceau libre équipé de lentilles ou d'autres éléments déformant tels que des hologrammes ou miroirs incurvés.

23. Dispositif selon l'une quelconque des revendications 16 à 21, **caractérisé en ce que** le démultiplexeur de modes (MM) effectue la superposition du signal de l'oscillateur local (LO) avec le signal à détecter, le signal de l'oscillateur local (LO) pouvant être soit perpendiculaire au plan de guidage de faisceau des autres signaux dans le démultiplexeur de modes (MM), soit réparti à l'aide de miroirs partiellement transparents (TS) et peut être amené à plusieurs lentilles à gradient d'indice (GLLo).

24. Dispositif selon l'une quelconque des revendications 12 à 23, **caractérisé en ce qu'**il est prévu une lentille à gradient d'indice (GLLo) qui convertit le signal de sortie de l'oscillateur local (LO) en un faisceau parallèle et le rassemble avec le signal à détecter (TS) dans un miroir partiellement transparent, le couplage des deux signaux étant effectué ensuite à l'aide d'une lentille à gradient d'indice (GLaus) dans un guide d'ondes optiques monomodal (4), une diversité de phase et/ou une diversité de polarisation étant réalisée(s) en particulier.
